# EUROPÄISCHE PATENTSCHRIFT

(11) **EP 2 652 268 B1**
(45) Veröffentlichungstag und Bekanntmachung des Hinweises auf die Patenterteilung: **01.04.2015**
(21) Anmeldenummer: 12702810.8
(22) Anmeldetag: 01.02.2012
(51) Int. Cl.: F01D 5/28

(54) **Turboverdichterlaufrad und zugehöriges Herstellungsverfahren**
Turbocompressor rotor and corresponding manufacturing method
Rotor de turbocompresseur et procédé de fabrication associé

(30) Priorität: 04.02.2011 DE 102011003632
(43) Veröffentlichungstag der Anmeldung: 23.10.2013
(73) Patentinhaber: Siemens Aktiengesellschaft, 80333 München (DE)
(72) Erfinder: BODE, Ralf, 47441 Moers (DE)
(86) Internationale Anmeldenummer: PCT/EP2012/051683
(87) Internationale Veröffentlichungsnummer: WO 2012/104347

(56) Entgegenhaltungen:
- EP-A1- 0 639 691
- EP-A2- 0 867 522
- EP-A2- 1 215 366
- GB-A- 616 432
- GB-A- 1 230 536
- JP-A- 2 101 143
- JP-A- 5 163 556
- JP-A- 2000 356 103
- JP-A- 2001 049 398

## Beschreibung

Die Erfindung betrifft ein Turboverdichterlaufrad und ein Verfahren zum Herstellen des Turboverdichterlaufrads.

Turboverdichter, insbesondere in Axial- und Radialbauweise, finden im Anlagenbau zum Verdichten von Prozessgas Anwendung. Das Prozessgas kann ein Gasgemisch oder typenreines Gas sein, das mit Partikeln kontaminiert ist. Diese Kontamination kann beispielsweise ihre Ursache darin haben, dass der Turboverdichter als Luftverdichter einer Luftzerlegungsanlage eingesetzt ist und die in den Turboverdichter einströmende Luft Sand aus der Umgebung beinhaltet. Ebenso tritt eine Kontamination des Prozessgases mit Partikeln auf, wenn beispielsweise das Prozessgas in einem geschlossenen Prozess durch eine lose Schüttung eines Katalysators geleitet wird, wodurch von dem Prozessgas Staubpartikel des Katalysators mitgerissen werden.

Zum Verdichten des Prozessgases weist der Turboverdichter mindestens ein Turboverdichterlaufrad auf, das herkömmlich auf einer Welle montiert von einem Antriebsaggregat rotiert wird. Das Turboverdichterlaufrad weist einen Laufradkörper auf, der von Schaufeln gebildet ist, mit denen durch deren Rotation Arbeit auf das Prozessgas übertragen wird. Herkömmlich liegt die Drehzahl des Turboverdichterlaufrads im Bereich von mehreren tausend Umdrehungen pro Minute, wobei die Schaufeln von dem Prozessgas umströmt werden.

Ist das Prozessgas mit den Partikeln kontaminiert, so treffen die Partikel insbesondere im Bereich der Vorderkanten der Schaufeln auf das Material des Laufradkörpers. In der Regel ist der Härtegrad der Partikel höher als der des Materials des Laufradkörpers, so dass mit dem Auftreffen der Partikel auf den Laufradkörper ein Verschleiß des Laufradkörpermaterials einhergeht. Durch diese am Laufradkörper verursachten Verschleißspuren kann das Turboverdichterlaufrad derart beschädigt sein, dass sowohl die strömungsmechanische Wirksamkeit als auch die mechanische Festigkeit des Turboverdichterlaufrads maßgeblich beeinträchtigt ist.

Eine Abhilfe schafft das Vorsehen von Sieben, Filtern oder Fliehkraftabscheidern stromauf des Turboverdichters, wodurch vor Eintreten des Prozessgases in den Turboverdichter die Partikel aus dem Prozessgas eliminiert werden. Diese Apparaturen sind in der Anschaffung teuer und führen zu einem energetisch ungünstigen Druckverlust in der Prozessgasströmung. Versagt ein Filter, beispielsweise weil der Filter aufgrund eines hohen Partikelaufkommens voll geworden ist, ist das Turboverdichterlaufrad dennoch einer hohen Partikelbelastung ausgesetzt, woraus sich an dem Turboverdichterlaufrad tiefe Verschleißspuren ausbilden können.

Eine andere Abhilfe könnte beispielsweise eine Beschichtung der Schaufeln mit einem harten Material schaffen. Dadurch, dass diese Beschichtung der Partikelbelastung ausgesetzt ist, verschleißt die Beschichtung selbst. Dabei bleibt das Basismaterial der Schaufel nur so lange von der Beschichtung geschützt, bis von den Partikeln die Beschichtung abgetragen ist. Außerdem kann an von den Partikeln vollständig abgetragenen Stellen der Beschichtung diese von der Prozessgasströmung unterwandert werden, wodurch ein schädliches Abheben der Beschichtung verursacht wird. Somit kann der Schutz der Schaufeln mit der Beschichtung nur temporär sein.

Aufgabe der Erfindung ist es, ein Turboverdichterlaufrad und ein Verfahren zum Herstellen des Turboverdichterlaufrads zu schaffen, wobei das Turboverdichterlaufrad eine hohe Verschleißbeständigkeit hat sowie kostengünstig in der Herstellung ist.

Aus der EP 1 215 366 A2 ist eine Turbomaschinenschaufel bekannt, welche durch spanabhebende Bearbeitung aus einem Vormaterial erstellt ist. Dabei kommt eine Stahllegierung mit einem Gewichtsanteil von Kohlenstoff von 0,1% bis 0,35%, bevorzugt von 0,15% bis 0,3%, und einem Gewichstanteil von Chrom von 8% bis 22%, bevorzugt 9% bis 16%, zum Einsatz.

Aus der GB 1 230 536 A ist eine Turbinenschaufel für eine Kondensationsturbine bekannt. Diese ist im äußeren Bereich aus einer Stahllegierung mit einem Gewichtsanteil von Chrom von 10% bis 15% und einen Kohlenstoffanteil von mindestens 0,15% aufgebaut.

Aus der JP 2000 356103 A, der GB 616 432 A, der EP 0 867 522 A2, der JP 2001 049398 A, der JP 5 163 556 A, der JP 2 101143 A und der EP 0 639 691 A1 sind ebenfalls Turbinenschaufeln aus Stahllegierungen bekannt. Auch diese enthalten Chrom und Kohlenstoff, wobei die Gewichtsanteile in etwa im oben beschriebenen Bereich liegen.

Die Aufgabe wird gelöst mit den Merkmalen der unabhängigen Patentansprüche. Vorteilhafte Ausgestaltungen dazu sind in den weiteren Patentansprüchen angegeben.

Die erfindungsgemäß angegebenen Stahlwerkstoffe haben einen Härtegrad, der vergleichbar oder höher als der Härtegrad von herkömmlich auftretenden Partikeln im Prozessgas ist. Von daher ist die Erosionsneigung des Laufradkörpers durch abrasiven Verschleiß hervorgerufen von den Partikeln gering.

Dadurch, dass der Laufradkörper durch und durch mit dem erfindungsgemäß hergestellten Stahlwerkstoff hergestellt ist, ist seine Unempfindlichkeit gegen abrasiven Verschleiß dauerhaft, da der Laufradkörper ohne etwa eine oberflächlich aufgebrachte Schutzschicht auskommt. Außerdem sind die erfindungsgemäß angegebenen Stahlwerkstoffe korrosionsbeständig, wodurch das Laufrad dauerhaft gegen Erosionskorrosion geschützt ist.

Als erfindungsgemäßes Verfahren zum Herstellen des Turboverdichterlaufrads ist ein Gussverfahren angegeben. Dies ist vorteilhaft zum Formen der erfindungsgemäß angegebenen Stahlwerkstoffe, da diese einen hohen Härtegrad haben und dadurch beispielsweise spanend oder durch Schmieden nur schwer bearbeitbar sind. Dadurch, dass die erfindungsgemäß angegeben Stahlwerkstoffe nichtrostende Gussstähle mit hohem Kohlenstoffgehalt sind, sind diese vorteilhaft gießfähig.

Zum Fertigen des Gussmodells entsprechend der Geometrie des Laufradkörpers ist erfindungsgemäß die Rapid-Technologie vorgesehen. Das Gussmodell wird zum Herstellen der Gussform mit Formsand umgeben, wobei nach dem Aushärten des Formsands die Gussform aus dem Formsand entfernt wird. Alternativ kann die Gussform ohne das Gussmodell hergestellt werden, wenn die Gussform entsprechend der negativen Geometrie des Laufradkörpers mit der Rapid-Technologie hergestellt wird. Aufgrund des Einsatzes der Rapid-Technologie sind sowohl für die Gussform als auch für das Gussmodell unterschiedlichste und variantenreiche Geometrien denkbar.

Hinsichtlich der Variantenvielfalt der herkömmlichen Laufradkörpergeometrie ist es vorteilhaft die Rapid-Technologie zu verwenden. Dadurch ist ein herkömmlich verwendetes und aufwendig herzustellendes Holzmodell verzichtbar, da stattdessen das erfindungsgemäße Gussmodell eingesetzt werden kann.

Bevorzugterweise wird ein Modell des Laufradkörpers aus lasergehärtetem Harz mit dem Rapid-Prototyping schichtweise aufgebracht, bis das Gussmodell hergestellt ist. Alternativ wird ein laseraushärtender Formsand zum Herstellen der Gussform verwendet, wobei in einem Formkasten schichtweise die Negativgeometrie des Laufraskörpers erstellt wird, bis die Gussform hergestellt ist.

Durch das schichtweise Auftragen beim Rapid-Prototyping wird vorteilhaft erreicht, auch komplexe Geometrien von Laufradkörpern einfach und kostengünstig hergestellt werden können. Beispielsweise lassen sich relativ unproblematisch Geometrien mit Überhängen, Hinterschneidungen, Kanälen, usw. erzeugen. Im Gegensatz dazu können mit konventionellen Verfahren, wie beispielsweise Fräsen, nur bedingt oder mit hohem Aufwand ähnlich komplexe Geometrien realisiert werden.

Anhand eines Ausführungsbeispiels wird im Folgenden die Erfindung näher erläutet.

Ein Turboverdichterlaufrad ist für einen Turboverdichter zum Verdichten von Prozessgas vorgesehen. Das Turboverdichterlaufrad weist einen Laufradkörper auf, der beim Betrieb des Turboverdichters mit dem Prozessgas in Kontakt steht. Das Turboverdichterlaufrad ist in Radialbauweise als ein Impeller konstruiert, so dass der Laufradkörper von einer Radscheibe, einer von der Radscheibe axial distanzierten Deckscheibe und zwischen der Radscheibe und der Deckscheibe angeordneten, gleichmäßig in Umfangsrichtung angeordneten Schaufeln gebildet ist.

Zum Herstellen des Laufradkörpers wird ein Gussmodell entsprechend der gewünschten Geometrie des Laufradkörpers gefertigt. Dabei wird mit einem Rapid-Prototyping-Verfahren Harz schichtweise so aufgebracht und lasergehärtet, dass die Geometrie des Laufradkörpers nachgebildet und das Gussmodell hergestellt wird.

Das Gussmodell wird in einem Formkasten platziert und mit aushärtendem Formsand umgegeben. Sobald der Formsand eine ausreichend stabile Gussform bildet, wird das Gussmodell entfernt und die dadurch entstandene Gussform mit einem flüssigen Stahlgusswerkstoff gefüllt. Der Stahlwerkstoff ist die Legierung GX40CrNiMo27-5.

Sobald der Stahlwerkstoff in der Gussform abgekühlt und dadurch fest geworden ist, wird der gewonnene Stahlgusswerkstoffkörper von der Gussform entfernt und als der Laufradkörper mit Nachbearbeitungen fertig gestellt.

## Patentansprüche

1. Turboverdichterlaufrad für einen Turboverdichter zum Verdichten von Prozessgas, mit einem das Prozessgas kontaktierenden Laufradkörper, der durch und durch aus einem nichtrostenden Stahlwerkstoff hergestellt ist, der 0,3 bis 1,2% Kohlenstoff und 12 bis 19% Chrom aufweist, **dadurch gekennzeichnet, dass** der Stahlwerkstoff die Legierung X39CrMo17-1 aufweist.

2. Turboverdichterlaufrad gemäß Anspruch 1, wobei der Stahlwerkstoff bis 2,5% Molybdän aufweist.

3. Turboverdichterlaufrad gemäß Anspruch 2, wobei der Stahlwerkstoff bis 1,5% Vanadium aufweist.

4. Verfahren zum Herstellen eines Turboverdichterlaufrads gemäß einem der Ansprüche 1 bis 3 durch Gießen, mit den Schritten:
- Fertigen eines Gussmodells entsprechend der Geometrie des Laufradkörpers mit einer Rapid-Technologie und Herstellen einer Gussform mit dem Gussmodell; oder Fertigen einer Gussform entsprechend der negativen Geometrie des Laufradkörpers mit einer Rapid-Technologie;
- Einfüllen des flüssigen Stahlwerkstoffs in die Gussform zum Ausbilden eines Gusswerkstücks als den Laufradkörper;
- Fertigstellen des Turboverdichterlaufrads mit dem Laufradkörper.

5. Verfahren gemäß Anspruch 4, wobei die Rapid-Technologie ein Rapid-Prototyping-Verfahren ist.

## Claims

1. Turbocompressor rotor for a turbocompressor for compressing process gas, having a rotor body which makes contact with the process gas and which is produced entirely from a stainless steel material comprising 0.3 to 1.2% carbon and 12 to 19% chromium, **characterized in that** the steel material comprises the alloy X39CrMo17-1.

2. Turbocompressor rotor according to Claim 1, wherein the steel material comprises up to 2.5% molybdenum.

3. Turbocompressor rotor according to Claim 2, wherein the steel material comprises up to 1.5% vanadium.

4. Process for producing a turbocompressor rotor as claimed in one of Claims 1 to 3 by casting, comprising the following steps:
- manufacturing a casting model corresponding to the geometry of the rotor body by rapid technology and producing a casting mold using the casting model; or manufacturing a casting mold corresponding to the negative geometry of the rotor body by rapid technology;
- introducing the liquid steel material into the casting mold to form a cast workpiece as the rotor body;
- finishing the turbocompressor rotor with the rotor body.

5. Process according to Claim 4, wherein the rapid technology is a rapid prototyping process.

## Revendications

1. Rotor de turbocompresseur pour un turbocompresseur de compression de gaz de processus, comprenant un corps de rotor entrant en contact avec le gaz de processus, qui est fabriqué en et complètement en un matériau d'acier inoxydable, qui a de 0,3 à 1,2% de carbone et de 12 à 19% de chrome, **caractérisé en ce que** le matériau d'acier comporte l'alliage X39CrMo17-1.

2. Rotor de turbocompresseur suivant la revendication 1, dans lequel le matériau d'acier comporte jusqu'à 2,5% de molybdène.

3. Rotor de turbocompresseur suivant la revendication 2, dans lequel le matériau d'acier comporte jusqu'à 1,5% de vanadium.

4. Procédé de fabrication d'un rotor de turbocompresseur suivant l'une des revendications 1 à 3 par coulée, comprenant les stades :
- fabrication d'un modèle de coulée correspondant à la géométrie du rotor par une technologie rapide et fabrication d'une lingotière de coulée par le modèle de coulée ; ou fabrication d'une lingotière de coulée correspondant à la géométrie négative du rotor par une technologie rapide ;
- remplissage de la lingotière de coulée par du matériau d'acier liquide pour former une pièce coulée en tant que rotor ;
- achèvement du rotor de turbocompresseur avec le rotor.

5. Procédé suivant la revendication 4, dans lequel la technologie rapide est un procédé rapide-prototyping.
